# EUROPÄISCHE PATENTSCHRIFT

(11) **EP 1 046 489 B1**
(45) Veröffentlichungstag und Bekanntmachung des Hinweises auf die Patenterteilung: **02.06.2004**
(21) Anmeldenummer: 00106684.4
(22) Anmeldetag: 29.03.2000
(51) Int. Cl.: B29C 51/04, B29C 51/26

(54) **Antriebseinrichtung für einen Steckhelfer zum mechanischen Verformen einer erwärmten Kunststofffolie oder -platte**
Drive assembly for a plug for mechanically deforming a heated thermoplastic foil or plate
Dispositif d'entraînement d' un poinçon pour transformer mécaniquement une feuille ou un panneau thermoplastique préchauffé

(30) Priorität: 17.04.1999 DE 19917472
(43) Veröffentlichungstag der Anmeldung: 25.10.2000
(73) Patentinhaber: Adolf Illig Maschinenbau GmbH & Co. KG, 74081 Heilbronn (DE)
(72) Erfinder: Karbach, Helmut, 74172 Neckarsulm-Amorbach (DE)

(56) Entgegenhaltungen:
- DE-A- 2 120 216
- DE-B- 1 132 320
- US-A- 3 267 521
- US-A- 3 548 459

## Beschreibung

Die Erfindung betrifft eine Antriebseinrichtung für einen Streckhelfer zum mechanischen Verformen einer erwärmten Kunststofffolie oder -platte nach der Gattung des Hauptanspruches.

Aus der DE 33 46 628 C 2, der DE 21 20 216 A und der DE 11 32 320 B sind pneumatische Antriebe der Streckhelfer bekannt. Nachteilig hierbei sind die geringen aufzubringenden Kräfte und der ungleichmäßige Bewegungsablauf, der zu Schreckmarken und ungleichmäßiger Verformung führt. Hydraulische Antriebe - dargestellt in der US-A - 3 548 459 und der DE 11 32 320 B - bringen diesbezüglich eine Verbesserung, bedingen aber hohe Kosten für die Hydraulik, die für eine hohe Taktzahl der Thermoformmaschine ausgelegt sein muss. Hygienische Gründe und ein hoher Lärmpegel sind weitere negative Folgen dieser Antriebsart.

Aus der US-A-3 267 521 ist ebenfalls ein pneumatischer Antrieb der Streckhelfer bekannt. Der pneumatische Antrieb steht mit zwei horizontal angeordneten Zahnstangen, einer Gleichlaufeinrichtung mit zwei Querwellen und vier Zahnrädern in Wirkverbindung. Diese vier Zahnräder kämmen in vier vertikal angeordneten Zahnstangen, die den Streckhelfer bewegen. Nachteilig hierbei sind der große, erforderliche Bauraum und die aufwändige Gleichlaufeinrichtung, ohne die bereits genannten Nachteile pneumatischer Antriebe zu vermeiden.

Durch Vorbenutzung des Anmelders sind mechanische Antriebe der Streckhelfer über einen Servomotor bekannt. Der Servomotor treibt mit einer Kugelrollspindel einen oberhalb der Streckhelfer angeordneten Schlitten mit eingebauter Mutter, an dem die Trägerplatte für alle Streckhelfer befestigt ist. Nachteilig bei diesem Antrieb ist eine große Bauhöhe und sein problematisches Verschleißverhalten, da die gesamte Streckhelferkraft von den Bauteilen Kugelrollspindel/Mutter übertragen werden muss, und das bei Taktzahlen bis 40 Takte pro Minute und damit bei hohen Fahrgeschwindigkeiten. Dies erfordert den Einsatz von Antrieben mit hoher Leistung, die recht teuer sind.

Der Erfindung liegt die Aufgabe zugrunde, die Antriebseinrichtung für die Streckhelfer so auszubilden, dass sie sehr einfach im Aufbau ist und kompakt baut. Eine separate Gleichlaufeinrichtung sollte nicht erforderlich sein. Es sollte ein günstiger Kraftverlauf ohne verschleißanfällige Bauteile gegeben sein. Der Bewegungsablauf der Streckhelfer sollte mit einem festgelegten Bewegungsablauf erfolgen können, der beim Auftreffen der Streckhelfer auf die Folienbahn nicht abgebremst wird. Die Antriebseinrichtung sollte sich so kapseln lassen, dass keine Verschmutzungsgefahr der Folienbahn bzw. der Behälter durch geschmierte Bauteile gegeben ist. Der einfache Einbau einer Überlastsicherung in Form einer mechanischen Sicherheitskupplung sollte möglich sein.

Zur Lösung der Aufgabe werden die kennzeichnenden Merkmale des Hauptanspruches vorgeschlagen. Weiterbildungen sind in den Unteransprüchen beschrieben. Ein Ausführungsbeispiel der Erfindung ist nachfolgend anhand der schematischen Zeichnungen näher beschrieben. Es zeigt:

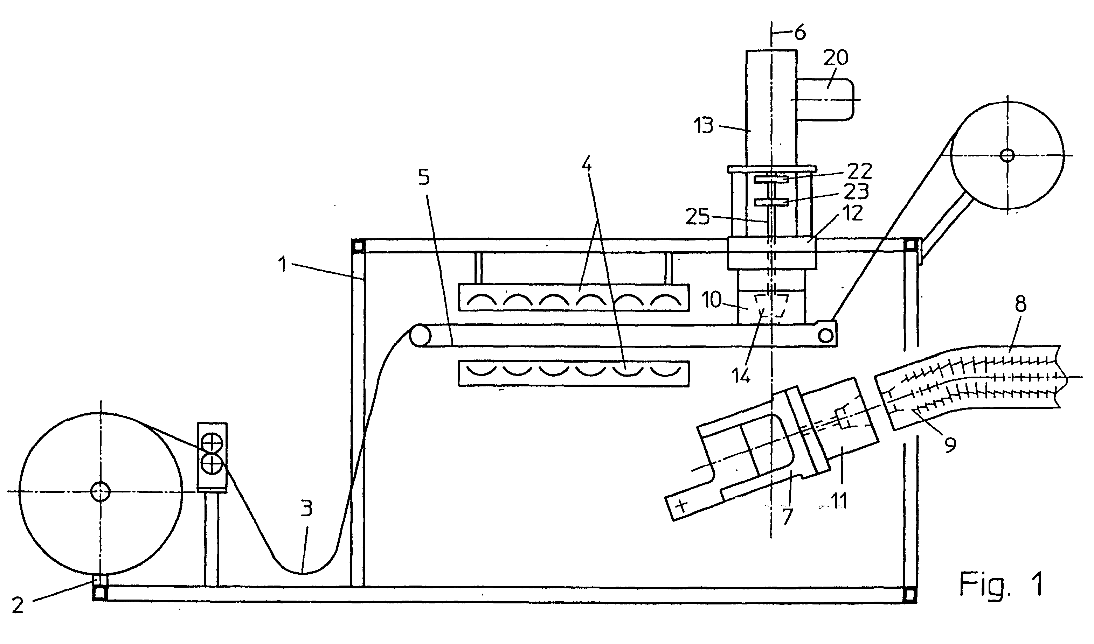

- Figur 1: eine von der Rolle arbeitende Thermoformmaschine mit einer Antriebseinrichtung für Streckhelfer.
- Figur 2: einen Querschnitt durch die Antriebseinrichtung.
- Figur 3: eine Draufsicht auf die Antriebseinrichtung.
- Figur 4: eine Variante der Antriebseinrichtung

Die erfindungsgemäße Antriebseinrichtung wird eingesetzt bei einem Rollenautomaten oder bei einer Plattenformmaschine und ist beispielhaft anhand des Einbaues in einen Rollenautomaten mit kombiniert formendem und stanzendem Werkzeug beschrieben. In einem Gestell 1 sind die wesentlichen Teile des Rollenautomaten untergebracht, eine Rollenaufnahme 2 steht eingangsseitig und entfällt, wenn die zu verformende Folienbahn 3 direkt von einem Extruder zugeführt wird. Auch die Heizeinrichtung 4 ist bei Extruderverkettung eventuell nicht erforderlich. Eine intermittierend betriebene Transporteinrichtung 5 führt die Folienbahn 3 zu einer Formstation 6, in der mittels Druckluft oder Vakuum Behälter 9 geformt werden. Nach dem Absenken und ggf. Schwenken des Formtisches 7, der das Unterteil 11 des Formwerkzeuges trägt, werden die Behälter 9 in Stapelrinnen 8 ausgestoßen.

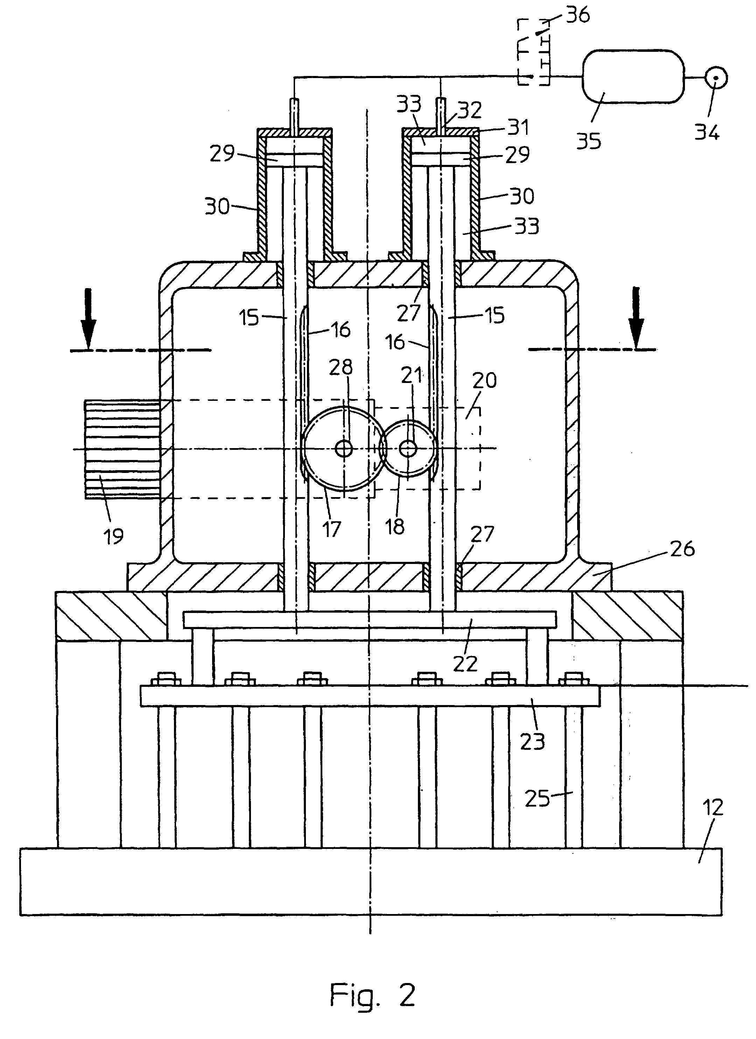

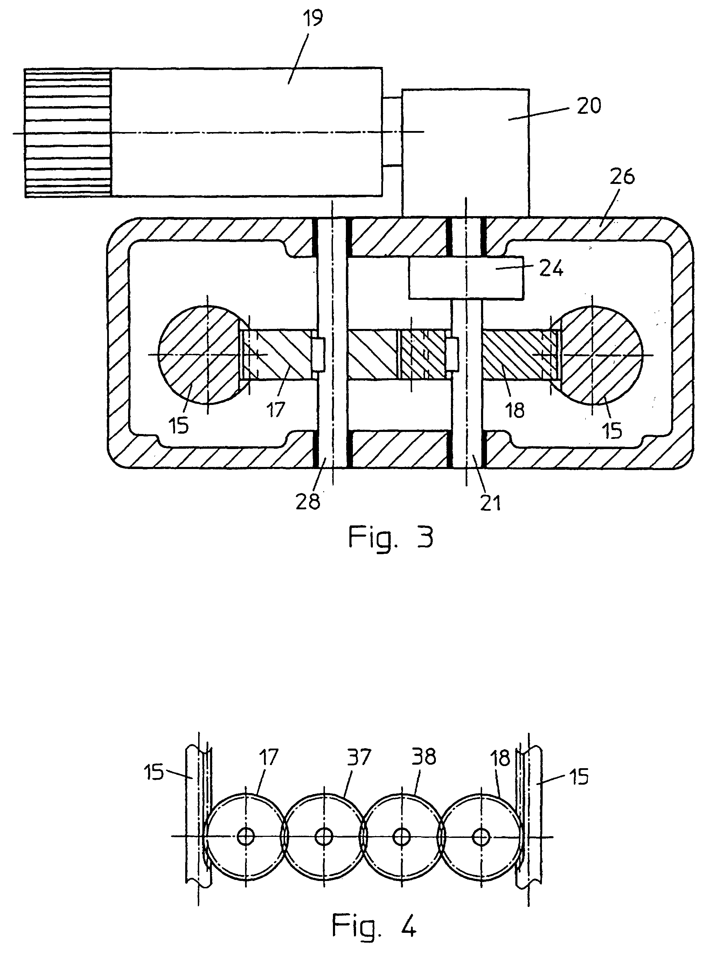

Das Oberteil 10 des Formwerkzeuges sitzt an einem Obertisch 12, an dem auch die Antriebseinrichtung 13 für mechanisch wirkende Streckhelfer 14 sitzt und die näher in den Figuren 2 und 3 dargestellt ist.

Die Antriebseinrichtung 13 besteht aus zwei Stangen 15 mit einem Bereich 16, der eine Verzahnung aufweist, wobei in dieser Verzahnung je ein Zahnrad 17, 18 kämmt. Beide Zahnräder 17, 18 kämmen zudem ineinander und ein Zahnrad 18 steht mit einem Antrieb 19 in Wirkverbindung. Aus baulichen Gründen kann die Antriebsachse des Antriebes 19 horizontal wie dargestellt liegen und über ein Winkelgetriebe 20 erfolgt der Antrieb der Welle 21, auf der das Zahnrad 18 sitzt. Die beiden Stangen 15 sitzen im Gehäuse 26 mit Führungen 27 zu deren Längsführung. Die Wellen 21, 28 der Zahnräder 17, 18 sind im Gehäuse 26 gelagert. Beide Stangen 15 sind mit einem Steg 22 verbunden, an dem die Trägerplatte 23 befestigt ist. Diese Trägerplatte 23 ist Teil des Formwerkzeuges, an ihr sind die Stangen 25 befestigt, die die Streckhelfer 14 tragen.

In Weiterbildung der Erfindung wird vorgeschlagen, die Oberseiten der Stangen 15 mit je einem Kolben 29 zu versehen, der in je einem Rohr 30 dichtend geführt ist, das mit einem Deckel 31 mit Luftanschluss 32 verschlossen ist. Der so gebildete Raum 33 steht mit einer Druckluftquelle 34 in Verbindung, wobei vorzugsweise ein Kessel 35 eingebaut ist. Man kann auf diese Weise die Streckhelfer 14 während der Abwärtsbewegung, bei der eine hohe Vorstreckkraft für die mechanische Verformung der Folienbahn 3 benötigt wird, zusätzlich zu der vom Antrieb 19 erzeugten Schubkraft mit der pneumatisch erzeugten Kraft beaufschlagen, während der Aufwärtsbewegung wird keine Kraft vom Streckhelfer gefordert. Hier kann der Antrieb 19 die von ihm erzeugbare Kraft zum Zurückschieben der Druckluft im Raum 33 in den Kessel 35 verwenden. Auf diese Weise kann der Antrieb 19 kleiner dimensioniert werden als wenn dieser für die gesamte Streckhelferkraft ausgelegt werden muss. Zudem erhöht sich die Dynamik der Streckhelferbewegung bei der Abwärtsfahrt, was für das Verfahren des Vorstreckens sehr wichtig ist.

Prinzipiell ist es möglich, den Raum 33 während der Aufwärtsbewegung auch zu entlüften über ein in Figur 2 strichpunktiert dargestelltes Ventil 36. Damit sinkt zwar der Energiebedarf des Antriebes 19 während der Aufwärtsbewegung, gleichzeitig steigt aber der Bedarf an Druckluft.

In Figur 2 ist dargestellt, wie zwei Zahnräder 17, 18 die Distanz zwischen den beiden Stangen 15 überbrücken. Sollte dieser Abstand bauartbedingt groß werden, kann dieser Abstand wie in Figur 4 dargestellt auch durch 4 Zahnräder 17, 18, 37, 38 bei gleicher Wirkungsweise überbrückt werden.

Beide Bauarten haben den Vorteil, dass die Zahnräder 17, 18, 37, 38 nur ein Drehmoment übertragen müssen und keinen axialen und keinen radialen Kräften ausgesetzt sind. Die horizontalen Kräfte auf die Stangen 15 heben sich auf. Durch Einsatz eines Servomotors als Antrieb 19 ist jeder gewünschte Bewegungsablauf der Streckhelfer 14 vorgebbar entsprechend den als optimal für bestimmte Verformungsverhältnisse ermittelten Werten.

Die Bauweise der Antriebseinrichtung 13 ermöglicht den einfachen Einbau einer Überlastsicherung 24 in die Kraftübertragung zwischen Winkelgetriebe 20 und Zahnrad 18, so dass bei Überlast keine Beschädigung von Bauteilen eintritt. Dieser Überlastfall kann z. B. auftreten, wenn die Streckhelfer 14 ungewollt auf eine kalte Folienbahn 3 treffen, die keine Verstreckung zulässt.

## Patentansprüche

1. Antriebseinrichtung für einen Streckhelfer zum mechanischen Verformen einer Kunststofffolie oder -platte vor oder während ihres Verformens zu einem Behälter mittels Druckluft oder Vakuum, wobei der Streckhelfer an einer Trägerplatte (23) befestigt ist, die mit zwei parallelen Stangen (15) verbunden ist, die jeweils in einem Teilbereich (16) eine Verzahnung aufweisen, in der je ein Zahnrad (17, 18) kämmt, **dadurch gekennzeichnet, dass** die beiden Zahnräder (17, 18) direkt oder über zwischengeschaltete Zahnräder (37, 38) ineinander kämmen und eines der Zahnräder (17, 18) mit einem als Servomotor ausgebildeten Antrieb (19) in Wirkverbindung steht.

2. Antriebseinrichtung nach Anspruch 1, **dadurch gekennzeichnet, dass** der Antrieb (19) direkt mit der Welle (21) des Zahnrades (17) gekuppelt ist.

3. Antriebseinrichtung nach Anspruch 1, **dadurch gekennzeichnet, dass** der Antrieb (19) über eine Überlastsicherung (24) mit der Welle (21) des Zahnrades (17) gekuppelt ist.

4. Antriebseinrichtung nach einem der Ansprüche 1 bis 3, **dadurch gekennzeichnet, dass** die Oberseite jeder Stange (15) mit einem Kolben (29) verbunden ist, der in einem Rohr (30) sitzt, wobei die so gebildete Kammer (33) und damit die Rückseite des Kolbens (29) mit Druckluft beaufschlagbar ist.

5. Antriebseinrichtung nach Anspruch 4 **dadurch gekennzeichnet, dass** die Rückseite des Kolbens (29) mit einem Druckspeicherkessel (35) in Verbindung steht.

6. Antriebseinrichtung nach Anspruch 4 oder 5 **dadurch gekennzeichnet, dass** der Druck in den Kammern (33) veränderbar ist.

7. Antriebseinrichtung nach Anspruch 6 **dadurch gekennzeichnet, dass** der Druck in den Rohren (30) während der Abwärtsbewegung erhöht, während der Aufwärtsbewegung abgesenkt wird.

## Claims

1. Drive device for a stretching aid for mechanical shaping of plastics material film or plate before or during deformation thereof to form a container by means of pressurised air or vacuum, wherein the stretching aid is fastened to a support plate (23), which is connected with two parallel rods (15) each having, in a part region (16), a toothing in which a respective gearwheel (17, 18) meshes, **characterised in that** the two gearwheels (17, 18) mesh in one another directly or by way of interposed gearwheels (37, 38) and one of the gearwheels (17, 18) is disposed in operative connection with a drive (19) constructed as a servomotor.

2. Drive device according to claim 1, **characterised in that** the drive (19) is directly coupled with the shaft (21) of the gearwheel (17).

3. Drive device according to claim 1, **characterised in that** the drive (19) is coupled with the shaft (21) of the gearwheel (17) by way of overload safety means (24).

4. Drive device according to one of claims 1 to 3, **characterised in that** the upper end of each rod (15) is connected with a piston (29) seated in a tube (30), wherein the thus-formed chamber (33) and thereby the rear side of the piston (29) can be loaded with pressurised air.

5. Drive device according to claim 4, **characterised in that** the rear side of the piston (29) is disposed in connection with a pressure storage vessel (35).

6. Drive device according to claim 4 or 5, **characterised in that** the pressure in the chambers (33) is variable.

7. Drive device according to claim 6, **characterised in that** the pressure in the tubes (30) is increased during downward movement, but reduced during upward movement.

## Revendications

1. Installation d'entraînement d'un poinçon servant à déformer mécaniquement un film ou une plaque de matière plastique avant et après sa déformation pour donner un récipient par air comprimé ou par le vide, le poinçon étant fixé à une plaque de support (23) elle-même reliée à deux colonnes parallèles (15) ayant chacune un segment (16), denté, avec lequel engrène un pignon (17, 18) respectif,
**caractérisée en ce que**
les deux pignons dentés (17, 18) engrènent l'un avec l'autre directement ou par l'intermédiaire de pignons dentés (37, 38) et l'un des pignons dentés (17, 18) coopère avec un moyen d'entraînement (19) en forme de servomoteur.

2. Installation d'entraînement selon la revendication 1,
**caractérisée en ce que**
le moyen d'entraînement (19) est couplé directement à l'arbre (21) du pignon denté (17).

3. Installation d'entraînement selon la revendication 1,
**caractérisée en ce que**
le moyen d'entraînement (19) est couplé à l'arbre (21) du pignon denté (17) par un dispositif de protection contre la surcharge (24).

4. Installation d'entraînement selon l'une des revendications 1 à 3,
**caractérisée en ce que**
le côté supérieur de chaque colonne (15) est relié à un piston (29) logé dans un tube (30) et la chambre (33) ainsi formée, le côté arrière du piston (29) est sollicitée par de l'air comprimé.

5. Installation d'entraînement selon la revendication 4,
**caractérisée en ce que**
le côté arrière du piston (29) coopère avec une cuve accumulatrice de pression (35).

6. Installation d'entraînement selon l'une des revendications 4 ou 5,
**caractérisée en ce que**
la pression dans les chambres (33) est variable.

7. Installation d'entraînement selon la revendication 6,
**caractérisée en ce que**
la pression dans les tubes (30) augmente pendant le mouvement de descente et diminue pendant le mouvement d'abaissement.
